# EUROPÄISCHE PATENTSCHRIFT

(11) **EP 3 528 074 B1**
(45) Veröffentlichungstag und Bekanntmachung des Hinweises auf die Patenterteilung: **18.11.2020**
(21) Anmeldenummer: 18157239.7
(22) Anmeldetag: 16.02.2018
(51) Int. Cl.: G05B 23/02

(54) **VERFAHREN ZUM ÜBERPRÜFEN DER BEZIEHUNG ZWISCHEN EINEM VISUELL AUF EINEM OPERATOR-CLIENT EINES PROZESSLEITSYSTEMS DARGESTELLTEN UND EINEM AKUSTISCH AUSGEGEBENEN PROZESSALARM EINES PROZESSOBJEKTES SOWIE OPERATOR-SYSTEM**
METHOD FOR VERIFYING THE RELATIONSHIP BETWEEN A PROCESS ALARM VISUALLY DISPLAYED ON AN OPERATOR CLIENT OF A PROCESS CONTROL SYSTEM AND AN ACOUSTIC PROCESS ALARM OF A PROCESS OBJECT AND OPERATOR SYSTEM
PROCÉDÉ DE VÉRIFICATION DE LA RELATION ENTRE UN ALARME DE PROCESSUS REPRÉSENTÉ DE MANIÈRE VISUELLE SUR UN DISPOSITIF CLIENT-OPÉRATEUR D'UN SYSTÈME DE CONDUITE DE PROCESSUS ET UN ALARME DE PROCESSUS ÉMIS DE MANIÈRE ACOUSTIQUE D'UN OBJET DE PROCESSUS AINSI QUE SYSTÈME OPÉRATEUR

(43) Veröffentlichungstag der Anmeldung: 21.08.2019
(73) Patentinhaber: Siemens Aktiengesellschaft, 80333 München (DE)
(72) Erfinder: Lutz, Benjamin, 76327 Pfinztal (DE)

(56) Entgegenhaltungen:
- EP-A1- 1 950 639
- WO-A2-2010/130343

## Beschreibung

Die Erfindung betrifft ein Verfahren zum Überprüfen der Beziehung zwischen einem visuell auf einem Operator-Client eines Prozessleitsystems dargestellten und einem akustisch ausgegebenen Prozessalarm eines Prozessobjektes gemäß dem Oberbegriff des Anspruchs 1. Die Erfindung betrifft ferner ein Operator-System gemäß dem Oberbegriff des Anspruchs 3 zur Durchführung des Verfahrens.

In der Prozessleittechnik sind insbesondere im Rahmen der Bedienung und Beobachtung verfahrenstechnischer Anlagen grafische Anzeigen zu Prozessobjekten, z. B. Prozessobjekte in Form von Messstellen, Tanks, Ventile, Sensoren, Aktuatoren vorgesehen, wobei die zu diesen Prozessobjekten gehörigen grafischen Anzeigen, beispielsweise Anzeigen in Form von Bild-Symbolen eines Anlagenbildes, Block-Symbolen zur Prozessobjektbeobachtung, Faceplates zur Prozessobjektbedienung, Meldefolgeanzeigen und/oder mit Gruppenalarmen dynamisierte Bildhierarchien, ..., auf einem Operator-Client eines Operator-Systems dargestellt werden. Für den Fall, dass ein Operator auf einen Prozessalarm eines Prozessobjektes hinzuweisen ist, kann dieser Alarm dem Operator sowohl visuell - z. B. als so genannter "Alarm-Banner" - auf dem Operator-Client als auch akustisch in Form eines Alarmtons über ein geeignetes Ausgabegerät bereitgestellt werden. Dabei kann der Operator den Alarmton stummschalten ("muten"), indem der Operator einen auf dem Operator-Client dargestellten so genannten "Alarm Annunciator Mute"-Button im oberen Bildschirmbereich neben dem Alarm-Banner des Operator-Clients anwählt. Falls der Operator den gerade ausgegebenen Alarmton eines ab einem ersten Zeitpunkt tₙ (n= 1, 2, ...) aktiven Alarms stummschaltet, beispielsweise weil der Operator den Alarm quittierte, so wird unmittelbar der Alarmton eines weiteren aktiven, ab einem zweiten Zeitpunkt t*n*-*₁* (n= 1, 2, ...) aktivierten Alarms abgespielt bzw. ausgegeben. Unter einem aktiven Alarm wird ein Alarm verstanden, welcher von einem Operator noch nicht quittiert wurde, weil der Operator z. B. diesen Alarm noch nicht bearbeitet bzw. aufgrund dieses Alarms noch keine geeigneten Maßnahmen bzgl. einer geeigneten Prozessbedienung ergriffen hat.

Gewöhnlich sind ein visuell ausgegebener Alarm-Banner und ein ausgegebener Alarmton konsistent zueinander, was bedeutet, dass der ausgegebene Alarmton zu dem angezeigten Alarm im Alarm-Banner "passt". Es kann allerdings vorkommen, dass mehrere aktive Alarme auftreten und mehrere Operatoren die dazugehörigen Alarmtöne "stummschalten, obwohl die Alarme noch nicht bearbeitet und quittiert sind. Dies kann schnell zu einer Inkonsistenz zwischen ausgegebenen Alarmton und dargestellten Alarm-Banner führen, was bedeutet, dass ein Operator einen Alarmton hört, der nicht zu dem dargestellten Alarm-Banner "passt" bzw. "im Einklang steht" und der auch nicht lokalisiert werden kann. Aufgrund dessen kann der Operator das Prozessobjekt, welches den Alarm und somit den Alarmton verursachte, nicht finden, bis alle zuvor stummgeschalteten Alarme behandelt und quittiert sind. Auch den Zeitpunkt, bis zu welchem das Prozessobjekt gefunden wird, kann der Operator nicht vorhersehen, falls die Inkonsistenz erst einmal eingetreten ist.

In der EP 1 950 639 A1 ist ein Verfahren zum Betreiben einer Prozessanlage offenbart, bei der auf Prozessebene eine Anzahl von Alarminformationen zum Anzeigen nicht ordnungsgemäßer Betriebsvorgänge der Prozessanlage generiert wird.

Die WO 2010/130343 A2 offenbart ein Alarmverwaltungssystem und ein dazugehöriges Verfahren zur Verwaltung von Alarmmeldungen aus Messwerten, Prozessgrößen und/oder Zustandsmeldungen einer technischen Anlage oder eines technischen Prozesses.

Der Erfindung liegt daher die Aufgabe zugrunde, ein Verfahren der eingangs genannten Art anzugeben, mittels dessen ein Operator jederzeit feststellen kann, ob eine Inkonsistenz zwischen einem akustisch und einem visuell ausgegebenen Prozessalarm vorliegt. Darüber hinaus ist ein Operator-System gemäß dem Oberbegriff des Anspruchs 3 zu schaffen, welches zur Durchführung des Verfahrens geeignet ist.

Diese Aufgabe wird im Hinblick auf das Verfahren durch die im kennzeichnenden Teil des Anspruchs 1 angegebenen, bezüglich des Operator-Systems durch die im kennzeichnenden Teil des Anspruchs 3 angegebenen Maßnahmen gelöst.

Vorteilhaft ist, dass die Voraussetzung für ein effizienteres und verbessertes Alarmmanagement geschaffen wird, wodurch insbesondere die Verfügbarkeit einer verfahrenstechnischen Anlage erhöht werden kann.

In einer Ausgestaltung der Erfindung gemäß den im Anspruch 2 angegebenen Maßnahmen wird ermöglicht, das ein Operator jederzeit das Alarm gebende bzw. das Alarm erzeugende Prozessobjekt beobachten und bedienen kann, welches die Quelle des akustisch ausgegebenen Prozessalarms darstellt bzw. verkörpert.

Es wird darauf hingewiesen, dass ein Prozessobjekt mehrere zusammengehörige Facetten aufweist. Beispielsweise umfasst ein Prozessabbild eines Servers eines Operator-Systems zu diesen Prozessobjekten gehörige Prozessabbild-Bausteine bzw. bedien- und beobachtungsrelevante Prozessdaten dieser Prozessobjekte, ein Automatisierungsgerät zu den Prozessobjekten gehörige Automatisierungsbausteine bzw. Steuerbausteine (CFCs, SFCs, ...) und ferner ein User-Interface eines Clients des Operator-Systems zu den Prozessobjekten gehörige Blocksymbole eines Anlagenbildes sowie so genannte Faceplates, wobei die Anlagenbilder zur Prozessbeobachtung und die Faceplates zur Prozessführung bzw. Prozessbedienung vorgesehen sind. Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen in einer vereinfachten Form:
- Figur 1: Bestandteile eines Leitsystems und
- Figuren 2 bis 4: Alarm-Darstellungen auf einem Operator-Client.

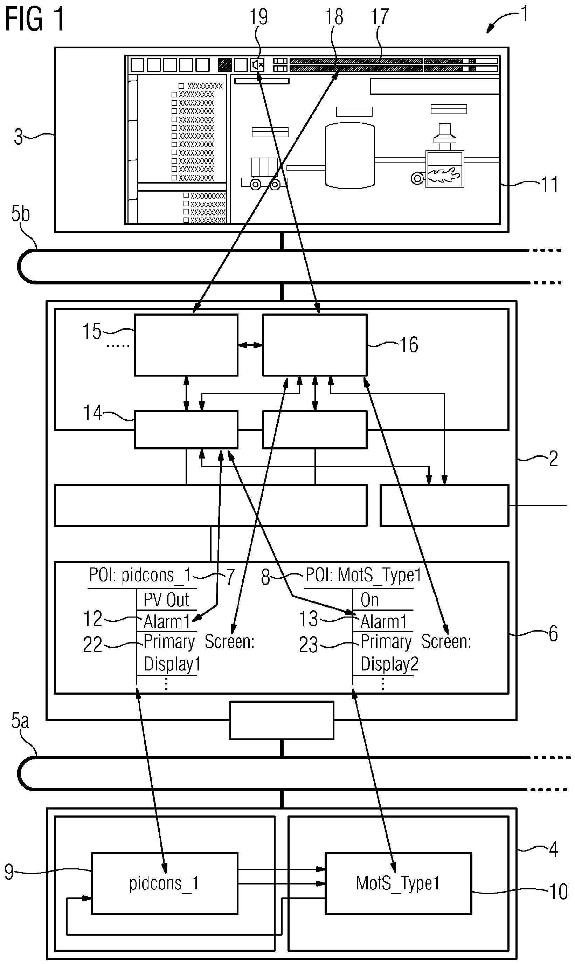

Die in den Figuren 1 bis 4 dargestellten gleichen Teile sind mit gleichen Bezugszeichen versehen.

In Figur 1 sind mit 1 Bestandteile eines Prozessleitsystems bezeichnet, welche im vorliegenden Ausführungsbeispiel einen Operator-Server 2 sowie einen Operator-Client 3 und ein Automatisierungsgerät 4 umfassen. Das Prozessleitsystem kann selbstverständlich eine Vielzahl von Automatisierungsgeräten aufweisen, die einerseits über einen Plant-Bus 5a mit dem Operator-Server 2 und andererseits über einen weiteren hier nicht dargestellten Bus mit dezentralen Peripherien verbunden sind, an welche eine Vielzahl von Feldgeräten (Sensoren, Aktuatoren) angeschlossen sind. Ferner sind im vorliegenden Beispiel lediglich ein Operator-Server 2 und ein Operator-Client 3 dargestellt. Selbstverständlich können weitere Operator-Server und Operator-Clients vorgesehen sein, wobei gewöhnlich jeweils ein Operator-Server und ein Operator-Client ein Operator-System bzw. eine Operator-Station bilden und die Operator-Clients sowie die Operator-Server an einen Terminal-Bus 5b angeschlossen sind.

Wie erläutert sind in der Prozessleittechnik insbesondere im Rahmen der Bedienung und Beobachtung verfahrenstechnischer Anlagen grafische Anzeigen zu Prozessobjekten vorgesehen, wobei Prozessobjekte, z. B. Prozessobjekte in Form von Messstellen, Tanks, Ventile, Sensoren, Aktuatoren, mehrere Facetten aufweisen. So weist z. B. ein Prozessabbild 6 des Operator-Servers 2 des Operator-Systems zu Prozessobjekten gehörige Prozessabbild-Bausteine 7, 8, das Automatisierungsgerät 4 zu diesen Prozessobjekten gehörige Automatisierungsbausteine 9, 10 und ferner ein User-Interface 11 des Operator-Clients 3 zu diesen Prozessobjekten gehörige in einem Anlagenbild darstellbare Faceplates und Blocksymbole auf. Die Blocksymbole sind zur Beobachtung von Parametern und Prozesswerten der Prozessobjekte, das Anlagenbild zur Prozessbeobachtung und die Faceplates zur Prozessführung bzw. Prozessbedienung vorgesehen, wobei im Rahmen der Prozessführung bzw. Prozessbedienung mittels der Faceplates ein Operator die Parameter der Prozessobjekte ändern kann.

Der Operator-Server 2 ist dazu ausgebildet, alle während der Prozesssteuerung auftretenden Alarme der jeweiligen Prozessobjekte auf einen Alarm-Tag 12, 13 des zu dem jeweiligen Prozessobjekt gehörigen Prozessabbild-Bausteins 7, 8 des Prozessabbildes 6 abzubilden. Diese Alarme weisen auf Prozessstörungen hin und werden mittels der AutomatisierungsBausteine 9, 10 des Automatisierungsgerätes 4 dem Operator-Server 2 übermittelt, welcher die Alarme in seinem Speicher 14 hinterlegt.

Im vorliegenden Ausführungsbeispiel weist der Operator-Server 2 eine Alarmanzeige-Komponente in Form einer Alarm-Banner-Komponente 15 sowie eine Alarmmelde-Komponente in Form einer Alarm-Annunciator-Komponente 16 auf, welche jeweils die im Speicher 12 hinterlegten Alarme auslesen. Die Alarm-Banner-Komponente 15 bereitet die ausgelesenen Alarme zu visuell auszugebenden bzw. darzustellenden Prozessalarmen auf, die Alarm-Annunciator-Komponente 16 bereitet die ausgelesenen Alarme zu akustisch auszugebenden Prozessalarmen auf. Die Alarm-Banner-Komponente 15 übermittelt den jeweiligen aufbereiteten Alarm dem User-Interface 11, welches dazu ausgebildet ist, den aufbereiteten Alarm zur Darstellung auf dem Operator-Client 3 zu verarbeiten. Im vorliegenden Beispiel werden Alarm-Banner 17, 18 auf dem Operator-Client 3 angezeigt, welche die visuell ausgegebenen bzw. dargestellten aktiven (noch nicht quittierten) Alarme repräsentieren. Entsprechend übermittelt die Alarm-Annunciator-Komponente 16 die aufbereiteten akustisch auszugebenden Prozessalarme einem geeigneten (akustischen) Ausgabegerät, welches diesen Alarmen zugeordnete Alarmtöne ausgeben. Darüber hinaus übermittelt die Alarm-Annunciator-Komponente 16 dem User-Interface 11 aufbereitete Daten zur Darstellung eines Mute-Buttons 19 und eines Loop-In-Buttons 20, wobei diese Buttons 19, 20 zu den Alarm-Banner 17, 18 benachbart angeordnet sind. Der Loop-In-Button 20 wird - wie im Folgenden noch gezeigt wird - nur dann eingeblendet, wenn der aktuell dargestellte Alarm-Banner nicht zu dem akustisch ausgegebenen Alarmton passt und somit eine Inkonsistenz zwischen dem visuell ausgegebenen und dem akustisch ausgegebenen Prozessalarm vorliegt. Für den Fall, dass der Operator den Mute-Button 19 aktiviert, indem der Operator diesen Mute-Button 19 z. B. mittels einer Maus selektiert, schaltet die Annunciator-Komponente 16 den entsprechenden gerade ausgegebenen Alarmton stumm, wobei diese Komponente 16 dazu den entsprechenden aufbereiteten akustisch auszugebenden Prozessalarm deaktiviert.

Um zu ermitteln bzw. um zu prüfen, ob der gerade visuell ausgegebene Prozessalarm von dem gerade akustisch ausgegebenen Prozessalarm abweicht, fragt die Annunciator-Komponente 16 die Alarm-Banner-Komponente 15 ab, welcher Alarm die Alarm-Banner-Komponente 15 aktuell für eine visuelle Darstellung aufbereitet. Für den Fall, dass die Annunciator-Komponente 16 erkennt, dass der aktuell von der Alarm-Banner-Komponente 15 aufbereitete und somit der aktuell visuell ausgegebene Alarm von dem durch die Annunciator-Komponente 16 aufbereiteten und somit von dem aktuell akustisch ausgegebenen Alarm abweicht, aktiviert die Annunciator-Komponente 16 den Loop-In-Button 20 zur Darstellung auf dem Operator-Client 3. Durch die Darstellung bzw. Anzeige des Loop-In-Buttons 20 wird der Operator auf die Abweichung hingewiesen, wodurch der Operator erkennt, dass der aktuell dargestellte Alarm-Banner nicht zu dem akustisch ausgegebenen Prozessalarm bzw. nicht zu dem ausgegebenen Alarmton passt; es liegt also eine Inkonsistenz zwischen dem visuell ausgegebenen und dem akustisch ausgegebenen Prozessalarm vor.

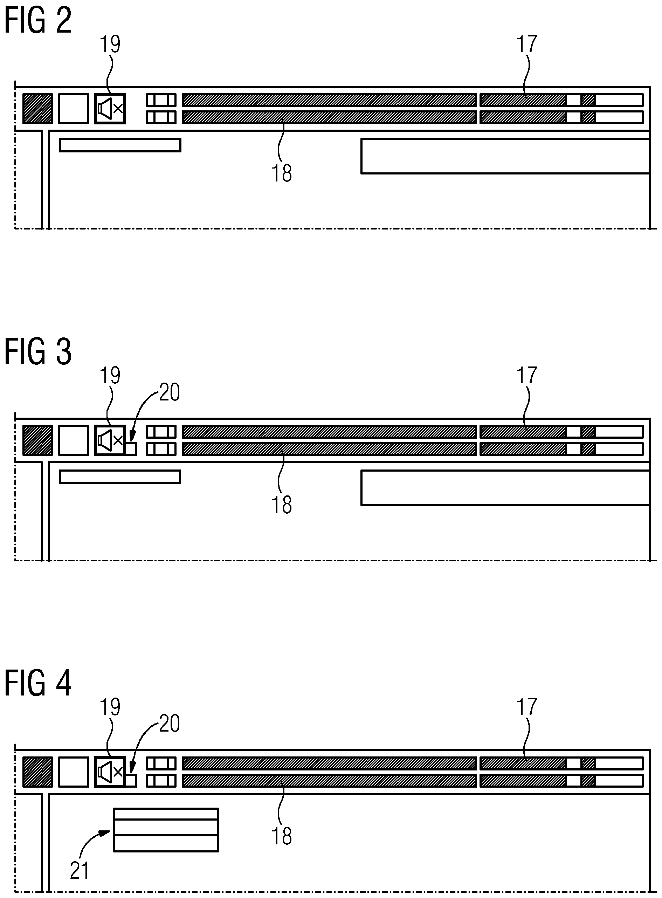

Im Folgenden wird auf die Figuren 2 bis 4 verwiesen, in welchen die Alarm-Banner 17, 18 auf dem Operator-Client 3 dargestellt sind, welche die visuell ausgegebenen bzw. dargestellten Alarme repräsentieren, wobei diese Alarme - wie erläutert - von dem Operator noch nicht bearbeitet und quittiert sind und wobei der Alarm-Banner 17 den aktuellsten, ab einem Zeitpunkt tₙ (n=1, 2, ...) aufbereiteten, aktiven Alarm und der Alarm-Banner 18 den weiteren aktuellen, ab einem Zeitpunkt tₙ₋₁ (n= 1, 2, ...) aktiven, aufbereiteten Alarm zeigt.

Es wird zunächst angenommen, dass der Operator den zu dem Alarm-Banner 17 gehörigen akustisch ausgegebenen Alarm stummgeschaltet hat, was dem Operator mittels des Mute-Buttons 19 (Alarmton ausgeschaltet) angezeigt wird (Figur 2). Der Loop-In-Button 20 ist nicht aktiviert und eingeblendet, was den Operator darauf hinweist, dass der visuell und der akustisch ausgegebene Alarm zueinander konsistent sind.

Es kann vorkommen, dass der Operator einen Alarmton, z. B. den Alarmton des aktuellsten aktiven Alarms stummschaltet ohne diesen Alarm zu quittieren. Im vorliegenden Beispiel wird angenommen, dass der Operator den Alarmton für den noch nicht quittierten Alarm (aktiv ab dem Zeitpunkt tₙ), ausschaltet, der mittels des Alarm-Banners 17 visuell dargestellt wird (Figur 3). Dadurch, dass dieser Alarmton stummgeschaltet ist, ertönt der Alarmton des nächsten aktiven Alarms (aktiv ab dem Zeitpunkt tₙ₋₁), der im vorliegenden Beispiel mittels des Alarm-Banners 18 visuell angezeigt wird. Mit anderen Worten: Zu dem visuell ausgegebenen Alarm (Alarm-Banner 17) wird ein Alarmton eines Alarms ausgegeben, der zu dem visuell ausgegebenen Alarm-Banner 18 gehört bzw. der dem Alarm-Banner 18 zugeordnet ist, wodurch Inkonsistenz herrscht bzw. vorliegt. Um diese Inkonsistenz dem Operator anzuzeigen, wird mittels der Annunciator-Komponente 16 der Loop-In-Button 20 aktiviert und auf dem Operator-Client 3 eingeblendet und somit die Abweichung des aktuell visuell ausgegebenen Alarms von dem aktuell akustisch ausgegebenen Alarm auf dem Operator-Client 3 angezeigt.

Um zu ermöglichen, das der Operator jederzeit das Alarm gebende bzw. das Alarm erzeugende Prozessobjekt beobachten und bedienen kann, welches die Quelle des akustisch ausgegebenen Prozessalarms darstellt bzw. verkörpert, ist in den zu den Prozessobjekten gehörigen Prozessabbild-Bausteinen 7, 8 jeweils eine Anlagenbild-Angabe 22, 23 eingetragen, die darauf hinweist, in welchem Anlagenbild das jeweilige Prozessobjekt Alarm gebend ist. Die Annunciator-Komponente 16 ist dazu ausgebildet, aus den jeweiligen Alarm erzeugenden und Alarmton gebenden Prozessabbild-Bausteinen 7, 8 die Anlagenbild-Angabe 22, 23 auszulesen, wobei aufgrund der Anlagenbild-Angabe 22, 23 die Darstellung des Anlagenbildes, von Teilen des Anlagebildes, eines zu dem Prozessobjekt gehörigen Blocksymbols und/oder eines zu dem Prozessobjekt gehörigen Faceplates auf dem Operator-Client 3 ausgelöst wird, falls der Operator den die Abweichung anzeigenden Loop-In-Button 20 des Operator-Clients 3 z. B. mittels einer Maus anwählt bzw. selektiert.

Im vorliegenden Beispiel (Figur 4) wird nach der Selektion bzw. Betätigung des Loop-In-Buttons 20 - trotz Inkonsistenz zwischen dem visuell und dem akustisch ausgegebenen Alarm - ein Blocksymbol 21 im Anlagenbild eingeblendet bzw. unter der Vielzahl von Blocksymbolen im Anlagenbild grafisch hervorgehoben, welches das Alarmton gebende Prozessobjekt repräsentiert und welches für die Prozessbeobachtung vorgesehen ist. Aufgrund der Einblendung im Anlagenbild ist das Alarmton erzeugende bzw. Alarmton ausgebende Prozessobjekt lokalisiert. Für den Fall, dass für dieses Prozessobjekt kein Block-Symbol vorgesehen ist, wird ein zu diesem Prozessobjekt gehöriges Faceplate zur Prozessbedienung eingeblendet bzw. geöffnet.

Mittels der beschriebenen Maßnahmen wird eine korrelationsfähige Alarmmelder-Komponente geschaffen, wobei ein Operator jederzeit feststellen kann, ob eine Inkonsistenz zwischen einem akustisch und einem visuell ausgegebenen Alarm vorliegt. Ferner kann ein Operator jederzeit - auch für den Fall einer Inkonsistenz zwischen einem akustisch und einem visuell ausgegebenen Alarm - an die Quelle eines Alarmtons, d. h. zum Alarm gebenden Prozessobjekt, navigieren. Die Bedienung und Beobachtung verfahrenstechnischer Anlagen wird im Kontext "Alarmmanagement" verbessert, dadurch kann die Verfügbarkeit einer verfahrenstechnischen Anlage erhöht werden.

## Patentansprüche

1. Verfahren zum Überprüfen der Beziehung zwischen einem visuell auf einem Operator-Client (3) eines Prozessleitsystems (1) dargestellten und einem akustisch ausgegebenen Prozessalarm eines Prozessobjektes,
- wobei ein Operator-Server (2) des Prozessleitsystems (1) aufweist
- eine Alarmmelde-Komponente (16) zum Aufbereiten von akustisch auszugebenden Prozessalarmen und zum Übermitteln dieser Prozessalarme an eine Alarmausgabe und
- eine Alarmanzeige-Komponente (15) zum Aufbereiten von visuell auszugebenden Prozessalarmen und zum Übermitteln dieser Prozessalarme an den Operator-Client (3), auf welchem die Prozessalarme darstellbar sind, und
- wobei die Ausgabe der jeweiligen akustischen Prozessalarme mittels einer Operator-Eingabe am Operator-Client (3) deaktivierbar ist,
**dadurch gekennzeichnet, dass**
- die Alarmanzeige-Komponente (15) durch die Alarmmelde-Komponente (16) abgefragt wird, welcher Prozessalarm aktuell visuell ausgegeben wird,
- mittels der Alarmmelde-Komponente (16) geprüft wird, ob der aktuell visuell ausgegebene Prozessalarm von dem aktuell akustisch ausgegebenen Prozessalarm abweicht und
- die Abweichung am Operator-Client (3) angezeigt wird.

2. Verfahren nach Anspruch 1, **dadurch gekennzeichnet,**
- **dass** in zu den Prozessobjekten gehörigen Prozessabbild-Bausteinen (7, 8) eines im Operator-Server (2) hinterlegten Prozessabbildes (6) jeweils eine Anlagenbild-Angabe (22, 23) eingetragen wird, die darauf hinweist, in welchem Anlagenbild das jeweilige Prozessobjekt Alarmton gebend ist, und
- **dass** mittels der Alarmmelde-Komponente (16) aus den jeweiligen Alarm erzeugenden Prozessabbild-Bausteinen (7, 8) die Anlagenbild-Angabe (22, 23) ausgelesen wird, wobei aufgrund der Anlagenbild-Angabe (22, 23) die Darstellung des Anlagenbildes, von Teilen des Anlagebildes, eines zu dem Alarmton gebenden Prozessobjekt gehörigen Blocksymbols (21) und/oder eines zu dem Prozessobjekt gehörigen Faceplates auf dem Operator-Client ausgelöst wird, falls der Operator einen die Abweichung anzeigenden Button (20) des Operator-Clients (3) anwählt oder selektiert.

3. Operator-System für ein Prozessleitsystem (1), mit einem Operator-Server (2) und einem Operator-Client (3),
- wobei der Operator-Server (2) aufweist
- eine Alarmmelde-Komponente (16) zum Aufbereiten von akustisch auszugebenden Prozessalarmen und zum Übermitteln dieser Prozessalarme an eine Alarmausgabe, und
- eine Alarmanzeige-Komponente (15) zum Aufbereiten von visuell auszugebenden Prozessalarmen und zum Übermitteln dieser Prozessalarme an den Operator-Client (3), auf welchem die Prozessalarme darstellbar sind, und
- wobei die Ausgabe der jeweiligen akustischen Prozessalarme mittels einer Operator-Eingabe am Operator-Client (3) deaktivierbar ist,
**dadurch gekennzeichnet,**
- **dass** die Alarmmelde-Komponente (16) dazu ausgebildet ist,
- die Alarmanzeige-Komponente (15) abzufragen, welcher Prozessalarm aktuell visuell ausgegeben wird, und
- zu prüfen, ob der aktuell visuell ausgegebene Prozessalarm von dem aktuell akustisch ausgegebenen Prozessalarm abweicht, und
- **dass** der Operator-Client (3) dazu ausgebildet ist, die von der Alarmmelde-Komponente (16) übermittelte Abweichung zu empfangen und anzuzeigen.

4. Operator-System nach Anspruch 3, **dadurch gekennzeichnet,**
- **dass** in zu den Prozessobjekten gehörigen Prozessabbild-Bausteinen (7, 8) eines im Operator-Server (2) hinterlegten Prozessabbildes (6) jeweils eine Anlagenbild-Angabe (22, 23) eingetragen ist, die darauf hinweist, in welchem Anlagenbild das jeweilige Prozessobjekt Alarmton gebend ist, und
- **dass** die Alarmmelde-Komponente (16) dazu ausgebildet ist, aus den jeweiligen Alarm erzeugenden Prozessabbild-Bausteinen (7, 8) die Anlagenbild-Angabe (22, 23) auszulesen und dem Operator-Client (3) zu übermitteln, wobei aufgrund der Anlagenbild-Angabe (22, 23) die Darstellung des Anlagenbildes, von Teilen des Anlagebildes, eines zu dem Prozessobjekt gehörigen Blocksymbols (21) und/oder eines zu dem Prozessobjekt gehörigen Faceplates auf dem Operator-Client (3) ausgelöst wird, falls der Operator einen die Abweichung anzeigenden Button (20) des Operator-Clients (3) anwählt oder selektiert.

## Claims

1. Method for checking the relationship between a process alarm of a process object displayed visually on an operator client (3) of a process control system (1) and output acoustically,
- wherein an operator server (2) of the process control system (1) has
- an alarm message component (16) for preparing process alarms to be output acoustically and for transmitting these process alarms to an alarm output and
- an alarm display component (15) for preparing process alarms to be output visually and for transmitting these process alarms to the operator client (3), on which the process alarms can be displayed, and
- wherein the output of the respective acoustic process alarms can be deactivated by means of an operator input on the operator client (3),
**characterised in that**
- the alarm display component (15) is queried by the alarm message component (16), as to which process alarm is currently output visually,
- the alarm message component (16) is used to check whether the process alarm currently output visually deviates from the process alarm currently output acoustically and
- the deviation is shown on the operator client (3).

2. Method according to claim 1, **characterised in that**,
- a system image specification (22, 23) is entered into the process image modules (7, 8) of a process image (6) stored in the operator server (2), associated with the process objects, which indicates the system image in which the respective process object produces an alarm tone, and
- that the alarm message component (16) is used to read out the system image specifications (22, 23) from the process image modules (7, 8) generating the respective alarm, wherein on account of the system image specifications (22, 23) the display of the system image, of parts of the system image, of a block symbol (21) associated with the process object producing the alarm tone and/or a faceplate associated with the process object on the operator client is triggered if the operator selects a button (20) of the operator client (3) which shows the deviation.

3. Operator system for a process control system (1), having an operator server (2) and an operator client (3),
- wherein the operator server (2) has
- an alarm message component (16) for preparing process alarms to be output acoustically and for transmitting these process alarms to an alarm output and
- an alarm display component (15) for preparing process alarms to be output visually and for transmitting these process alarms to the operator client (3), on which the process alarms can be displayed, and
- wherein the output of the respective acoustic process alarms can be deactivated by means of an operator input on the operator client (3),
**characterised in that**
- the alarm message component (16) is embodied,
- to query the alarm display component (15) as to which process alarm is currently output visually, and
- to check whether the process alarm currently output visually deviates from the process alarm currently output acoustically and
- that the operator client (3) is embodied to receive and show the deviation transmitted by the alarm message component (16).

4. Operator system according to claim 3, **characterised in that**,
- a system image specification (22, 23) is entered into the process image modules (7, 8), associated with the process objects, of a process image (6) stored in the operator server (2), which indicates the system image in which the respective process object produces an alarm tone, and
- that the alarm message component (16) is embodied to read out the system image specifications (22, 23) from the process image modules (7, 8) generating the respective alarm and to transmit the same to the operator client (3), wherein on account of the system image specifications (22, 23) the display of the system image, of parts of the system image, of a block symbol (21) associated with the process object and/or a faceplate associated with the process object on the operator client (3) is triggered, if the operator selects a button (20) of the operator client (3) which shows the deviation.

## Revendications

1. Procédé de contrôle de la relation entre une alerte de processus représentée visuellement sur un client-opérateur (3) d'un système (1) de conduite de processus et une alerte de processus émise acoustiquement d'un objet de processus,
- dans lequel un serveur-opérateur (2) du système (1) de conduite de processus a
- un composant (16) d'annonce d'alerte pour la préparation d'alertes de processus à émettre acoustiquement et pour la transmission de ces alertes de processus à une sortie d'alerte et
- un composant (15) d'affichage d'alerte pour la préparation d'alertes de processus à émettre visuellement et pour la transmission de ces alertes de processus au client-opérateur (3), sur lequel les alertes de processus peuvent être représentées, et
- dans lequel la sortie des alertes de processus acoustiques respectives peut être désactivée au moyen d'une entrée d'opérateur au client-opérateur (3),
**caractérisé en ce que**
- le composant (15) d'affichage d'alerte est interrogé par le composant (16) d'annonce d'alerte sur le point de savoir quelle est l'alerte de processus en cours, qui est émise visuellement,
- on contrôle, au moyen du composant (16) d'annonce d'alerte, si l'alerte de processus en cours émise visuellement s'écarte de l'alerte de processus en cours émise acoustiquement et
- on indique l'écart au client-opérateur (3).

2. Procédé suivant la revendication 1, **caractérisé**
- **en ce que**, dans des modules (7, 8) de reproduction de processus, appartenant aux objets de processus, d'une reproduction (6) de processus mise en mémoire dans le serveur-opérateur (2), on enregistre, respectivement, une entrée (22, 23) d'image d'installation, qui indique l'image d'installation, dans laquelle l'objet de processus respectif donne un son d'alerte, et
- **en ce que**, au moyen du composant (16) d'annonce d'alerte, on lit, dans les modules (7, 8) de reproduction de processus produisant l'alerte respective, l'indication (22, 23) d'image d'installation, dans lequel, sur la base de l'indication (22, 23) d'image d'installation, la représentation de l'image d'installation, de parties de l'image de l'installation, d'un symbole bloc (21) appartenant à l'objet de processus donnant le son d'alerte et/ou d'une face-plate appartenant à l'objet de processus est déclenchée sur le client-opérateur, si l'opérateur choisit ou sélectionne un bouton (20), indiquant l'écart, du client-opérateur (3).

3. Système opérateur pour un système (1) de conduite de processus, comprenant un serveur-opérateur (2) et un client-opérateur (3),
- dans lequel le serveur-opérateur (2) a
- un composant (16) d'annonce d'alerte pour la préparation d'alertes de processus à émettre acoustiquement et pour la transmission de ces alertes de processus à une sortie d'alerte et
- un composant (15) d'affichage d'alerte pour la préparation d'alertes de processus à émettre visuellement et pour la transmission de ces alertes de processus au client-opérateur (3), sur lequel les alertes de processus peuvent être représentées, et
- dans lequel la sortie des alertes de processus acoustiques respectives peut être désactivée au moyen d'une entrée d'opérateur au client-opérateur (3),
**caractérisé**
- **en ce que** le composant (16) d'annonce d'alerte est constitué
- pour interroger le composant (15) d'indication d'alerte sur l'alerte de processus en cours, qui est émise visuellement, et
- pour contrôler si l'alerte de processus en cours, qui est émise visuellement, s'écarte de l'alerte de processus en cours émise acoustiquement, et
- **en ce que** le client-opérateur (3) est constitué pour recevoir et indiquer l'écart transmis par le composant (16) d'annonce d'alerte.

4. Système-opérateur suivant la revendication 3, **caractérisé**
- **en ce que**, dans des modules (7, 8) de reproduction de processus, appartenant aux objets de processus, d'une reproduction (6) de processus mise en mémoire dans le serveur-opérateur (2), on enregistre, respectivement, une entrée (22, 23) d'image d'installation, qui indique l'image d'installation, dans laquelle l'objet de processus respectif donne un son d'alerte, et
- **en ce que** le composant (16) d'annonce d'alerte est constitué pour lire, dans les modules (7, 8) de reproduction de processus produisant l'alerte, les indications (22, 23) d'image d'installation et les transmettre au client-opérateur (3), dans lequel, sur la base des indications (22, 23) d'image d'installation, la représentation de l'image d'installation, de parties de l'image de l'installation, d'un symbole bloc (21) appartenant à l'objet de processus donnant le son d'alerte et/ou d'une face-plate appartenant à l'objet de processus est déclenchée sur le client-opérateur, si l'opérateur choisit ou sélectionne un bouton (20), indiquant l'écart, du client-opérateur (3).
